# EUROPEAN PATENT SPECIFICATION

(11) **EP 1 900 625 B1**
(45) Date of publication and mention of the grant of the patent: **22.08.2012**
(21) Application number: 07111790.7
(22) Date of filing: 05.07.2007
(51) Int. Cl.: B62K 11/10

(54) **Oil filter cover structure**
Ölfilterdeckelstruktur
Structure de couvercle de filtre à huile

(30) Priority: 15.09.2006 JP 2006250811
(43) Date of publication of application: 19.03.2008
(73) Proprietor: HONDA MOTOR CO., LTD., Tokyo 107-8556 (JP)
(72) Inventor: Niizuma, Keiichiro, Saitama 351-0193 (JP)
(74) Representative: Rupp, Christian

(56) References cited:
- EP-A1- 1 584 549
- JP-A- 2003 065 023
- US-A1- 2004 124 029
- US-A1- 2006 065 458

## Description

The present invention relates to a motorcycle comprising an oil filter cover structure.

There has been known from the past an oil filter cover structure in which an oil filter is attached to a lower portion of an engine from the lateral direction (the crankshaft direction), and a cover member for covering the oil filter is provided in order to prevent the oil filter from being splashed from a ground surface (for example, refer to Patent Document 1).
[Patent Document 1] JP-A No. 2003-65023

However, the configuration in the past involves a problem that the number of components around the engine increases, thus increasing the cost and weight.
On the other hand, in the case of employing a configuration in which a lower portion of an engine is suspended by a body frame through a link member in a unit swing-type vehicle in which an engine, a driving system, and a rear wheel are integrally swung, it is desirable to address the above-described problem by effectively laying out the link member and the oil filter.
The document EP 1 584 549 A1 discloses a frame structure for a scooter type vehicle having a vehicle body frame and a floor panel provided on the vehicle body frame. The frame structure for the scooter type vehicle suspends a swing type power unit in such a manner as to allow the swing movement of the power unit. The engine is attached through a suspension link to the rear end of a main pipe in such a manner as to pivot together with the rear wheel.
The document US 2004/0124029 A1 discloses an engine mounting structure of a low floor type vehicle comprising a V-type engine. An exhaust system of the V-type engine comprises an exhaust pipe connected to the front cylinder in the bank. Said exhaust pipe passes on the right side of the front of the V-type engine. An oil filter is provided to the crank case in the front on the other side of the V-type engine, the oil filter being provided in the front of the left half of the crank case.
The present invention provides an oil filter cover structure in which an oil filter can be effectively prevented from being splashed with mud or from being hit by pebbles from a ground surface and the number of components around an engine can be minimized.
Claim 1 defines the invention while dependent claims 2 and 3 define further the present invention.
As solving means for the above-described problem, the invention proposes a motorcycle comprising an oil filter cover structure in which a lower portion of an engine (for example, an engine E in the embodiment) is swingably suspended by a body frame (for example, a body frame F in the embodiment) through a link member (for example, a link member 61 in the embodiment), wherein an oil filter (for example, an oil filter 68 in the embodiment) of a cartridge type is attached to a lower portion of the engine from the lateral direction, and the oil filter is arranged behind the link member while being adjacent thereto.

The invention described in Claim 2 is the oil filter cover structure, wherein the link member includes a coupling shaft (for example, a first coupling shaft 64 in the embodiment) inserted into a lower portion of the engine and a pipe bush (for example, a pipe bush 67 in the embodiment) into which the coupling shaft is inserted, the pipe bush being arranged ahead of the oil filter.

The invention described in Claim 3 is the oil filter cover structure, wherein a sensor (for example, an oil sensor 69 in the embodiment) for detecting an oil temperature or an oil pressure is provided, and is arranged behind the link member while being adjacent to the oil filter.

According to the invention defined in Claim 1, by allowing the oil filter of a cartridge type to be attached and detached to and from a lower portion of the engine from the lateral direction, it is possible to improve workability at the time of exchanging the oil filter. By arranging the oil filter behind the link member, the oil filter is effectively prevented from being splashed with mud or from being hit by pebbles from a ground surface. Thus, it is possible to cut down the cost and weight while minimizing the number of components around the engine without the necessity of providing an additional cover member and the like.

According to the invention described in Claim 2, by arranging the pipe bush of the link member ahead of the oil filter, a cover range of the oil filter can be increased.

According to the invention described in Claim 3, the link member, together with the oil filter, serves to cover the sensor, thereby effectively preventing the sensor from being splashed with mud or from being hit by pebbles from a ground surface with a simple configuration.
Fig. 1 is a left side view of a motorcycle in an embodiment of the invention.
Fig. 2 is a development cross sectional view of an engine of the motorcycle.
Fig. 3 is a perspective view of a lower portion of the engine viewed from the diagonally rear lower direction and from the outside of the vehicle-width direction.
Fig. 4 is a perspective view of a lower portion of the engine viewed from the outside of the vehicle-width direction and the slightly forward direction.
Fig. 5 is a development cross sectional view of another section of the engine.

Hereinafter, the embodiment of the present invention will be described with reference to the drawings. It should be noted that the directions of front, rear, left, right, and the like in the following description are the same as those of a vehicle unless otherwise described. Further, arrows FR, LH, and UP in the drawings indicate the front, left, and upper of the vehicle, respectively.

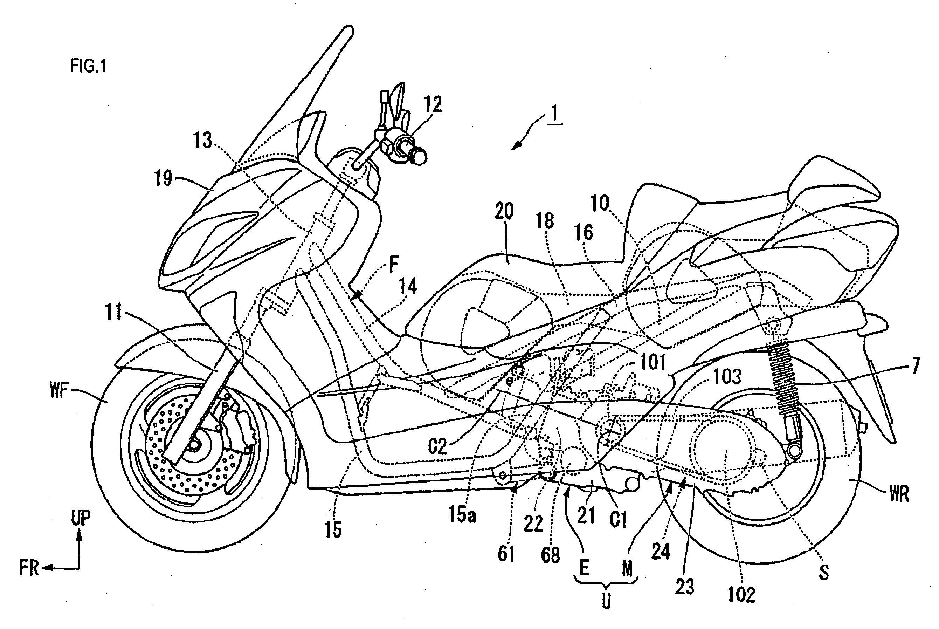

In a scooter-type motorcycle 1 which is a low-floor-type vehicle shown in Fig. 1, a body frame F includes a head pipe 13 at a front end, and a front fork 11 to which a front wheel WF is journaled and a steering handlebar 12 are steerably supported by the head pipe 13. Further, an integral swing-type power unit (hereinafter, referred to as a swing unit) U in which an engine E that is a power plant of the motorcycle 1 is arranged at a front portion and an axle S of a rear wheel WR that is a drive wheel is arranged at a rear portion is arranged on the rear lower side of the body frame F.

The front lower side of the swing unit U is supported by a rear portion of the body frame F in a vertically swingable manner through a link member 61 to be described later. On the other hand, a rear end of the swing unit U is supported by a rear end of the body frame F through a rear cushion 7 which is a cushion device. The swing unit U can vertically swing together with the rear wheel WR by allowing the vicinity of the link member 61 to serve as a pivot, and configures a rear suspension of a so-called unit swing type.

The body frame F includes a pair of left and right upper-down-frames 14, each of which extends downward to the rear from the head pipe 13, and a pair of left and right lower-down-frames 15, each of which extends downward to the rear from the head pipe 13 underneath the upper-down-frames 14 and then is bent to extend rearward. Each rear portion of the lower-down-frames 15 serves as a rear inclined part 15a which is bent to extend upward to the rear, and each rear end of the upper-down-frames 14 is coupled to the lower side of the rear inclined part 15a.

Each front end of a pair of left and right seat rails 16 which are inclined upward to the rear is coupled to each rear portion of the upper-down-frames 14, and each upper end of the rear inclined parts 15a is coupled to each intermediate portion of the seat rails 16. A support frame 10 is provided in an obliquely crossing manner between each rear portion of the seat rails 16 and each intermediate portion of the rear inclined parts 15a. The body frame F is configured mainly by the head pipe 13, the upper-down-frames 14, the lower-down-frames 15, the seat rails 16, and the support frame 10.

A body cover 19 covers around the body frame F. A tandem-type rider seat 20 is arranged in an openable and closable manner above a rear portion of the body cover 19. A goods accommodating box 18 which can accommodate a helmet and the like is arranged underneath the rider seat 20 and above the power unit U.

The swing unit U is formed by integrally providing the engine E at its front portion and a power transmission mechanism M on its rear left side.
The engine E is a water-cooled four-stroke OHC single cylinder engine in which a rotational axis line C1 of a crankshaft 31 is directed in the left-right direction (the vehicle-width direction), and is configured in such a manner that a cylinder part 22 is allowed to protrude forward in a substantially horizontal direction from a front end of a crankcase 21 (in more detail, the cylinder part 22 is allowed to protrude while being inclined slightly upward to the front). It should be noted that the reference numeral C2 in the drawing denotes an axis line (a cylinder axis line) of the cylinder part 22.

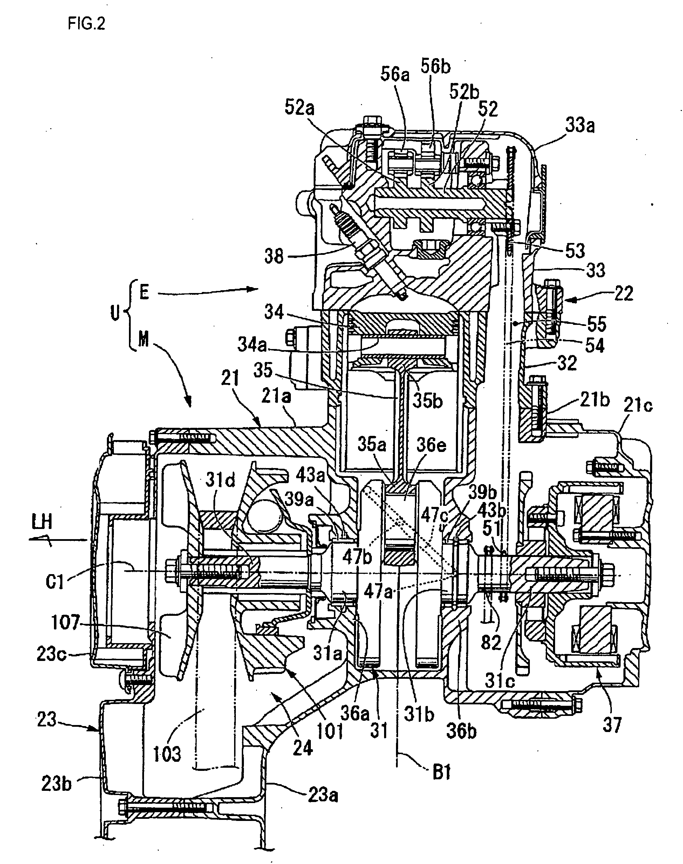

With reference to Fig. 2 together, the crankcase 21 is divided into left and right case half bodies 21a and 21b. A left case body 23a which is overhung to the left from the rear left side of the left case half body 21a and then extends rearward is formed integrally with the left case half body 21a of the crankcase 21. The left case body 23a, together with a left case cover 23b attached to the left side thereof, configures a transmission case 23 in the power transmission mechanism M. A right case cover 21c is attached to the right side of the right case half body 21b of the crankcase 21. A generator 37 is provided coaxially with the crankshaft 31 inside the right case cover 21c. It should be noted that the reference numeral B1 denotes a dividing face, orthogonal to the left-right direction, in the middle in the left-right direction (the position of a cylinder axis line C2) of the crankcase 21.

The power transmission mechanism M includes a belt-type continuously variable transmission mechanism 24 which continuously shifts a driving force of the engine E, and a gear-type speed reducing mechanism (not shown) which reduces an output speed of the belt-type continuously variable transmission mechanism 24 to output the reduced speed to the axle S. The belt-type continuously variable transmission mechanism 24 is accommodated in the transmission case 23 across the front-rear direction of the case 23, and the gear-type speed reducing mechanism is accommodated on the rear right side (inside the vehicle-width direction) of the transmission case 23. The axle S protrudes from the gear-type speed reducing mechanism to the right, and the rear wheel WR is attached to the axle S.

The cylinder part 22 is configured mainly by a cylinder body 32 attached to a front end of the crankcase 21, a cylinder head 33 attached to a front end of the cylinder body 32, and a head cover 33a attached to a front end of the cylinder head 33.
A piston 34 is fitted inside the cylinder body 32 in a reciprocating manner. A small end 35b of a connecting rod 35 is coupled to the piston 34 through a piston pin 34, and a large end 35a of the connecting rod 35 is coupled to a crank pin 31e of the crankshaft 31. Left and right journals 31a and 31b of the crankshaft 31 are rotatably supported, through metal bearings (plain bearings) 39a and 39b, by left and right crankshaft bearings 36a and 36b formed by left and right inner walls 41a and 41b of the left and right case half bodies 21a and 21b, respectively.

The rotational power of the crankshaft 31 is transmitted to the axle S through the power transmission mechanism M.
The belt-type continuously variable transmission mechanism 24 of the power transmission mechanism M is structured in such a manner that a V belt 103 is wound around a drive pulley 101 and a driven pulley 102, and continuously changes a speed reducing ratio with respect to the rotational power in a predetermined range along with a change in the rotational speed of the crankshaft 31. The drive pulley 101 is arranged in a front portion of the transmission case 23 while being coaxial with the crankshaft 31, and the driven pulley 102 is arranged on the rear side of the drive pulley 101, that is, in a rear portion of the transmission case 23.

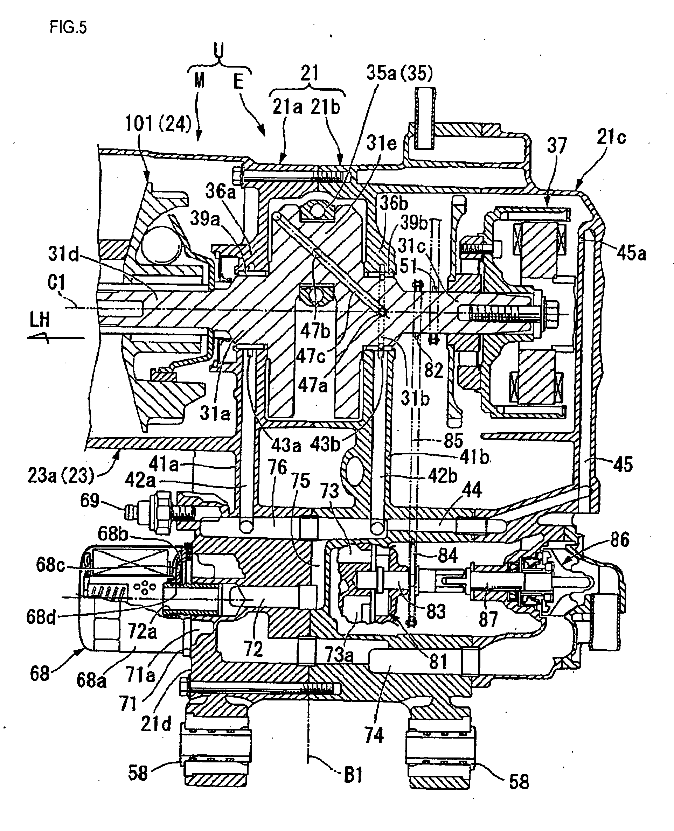

A right portion of the crankshaft 31 configures a generator shaft 31c which further extends from the right journal 31b to the right, and the generator shaft 31c supports the generator 37 accommodated in the right case cover 21c. Further, a drive sprocket 51 for driving a camshaft 52 in the cylinder head 33 is coaxially provided at a proximal end of the generator shaft 31c. Furthermore, a drive sprocket 82 for driving an oil pump 81 (see Fig. 5) is provided immediately on the left side of the drive sprocket 51.

The camshaft 52 is arranged parallel to (that is, along the left-right direction) the crankshaft 31 in the cylinder head 33, and both left and right side portions thereof are rotatably supported by the cylinder head 33. A driven sprocket 53 is coaxially provided at a left end of the camshaft 52. A cam chain 54 is wound around the driven sprocket 53 and the drive sprocket 51 of the crankshaft 31, so that the camshaft 52 is rotationally driven in synchronization with the crankshaft 31. A cam chain chamber 55 accommodating the cam chain 54 is provided on the right side of the cylinder head 33 and the cylinder 32.

Air intake/exhaust cams 52a and 52b are provided parallel to each other at left and right intermediate portions of the camshaft 52, and an input terminal of an air-intake-side rocker arm 56a or an exhaust-side rocker arm 56b abuts on the air intake/exhaust cams 52a and 52b. When the camshaft 52 is rotationally driven as described above, each of the rocker arms 56a and 56b swings in accordance with a cam pattern of the air intake/exhaust cams 52a and 52b, and actuates air intake/exhaust valves (not shown) to open and close air intake/exhaust ports of the cylinder head 33. It should be noted that the reference numeral 38 in the drawing denotes an ignition plug.

A left portion of the crankshaft 31 configures a drive pulley shaft 31d which further extends from the left journal 31a to the left, and the drive pulley shaft 31d supports the drive pulley 101 of the belt-type continuously variable transmission mechanism 24. A cooling fan 107 is formed on the left side of the drive pulley 101. The cooling fan 107 is rotated together with the drive pulley 101 at the time of driving the engine E, and outside air is accordingly introduced inside the transmission case 23 through an air intake duct 23c attached to the front right side of the transmission case 23, thus forcibly cooling the belt-type continuously variable transmission mechanism 24 and the like. An air-intake passage for engine different from a cooling air passage for transmission is provided inside the air intake duct 23c.

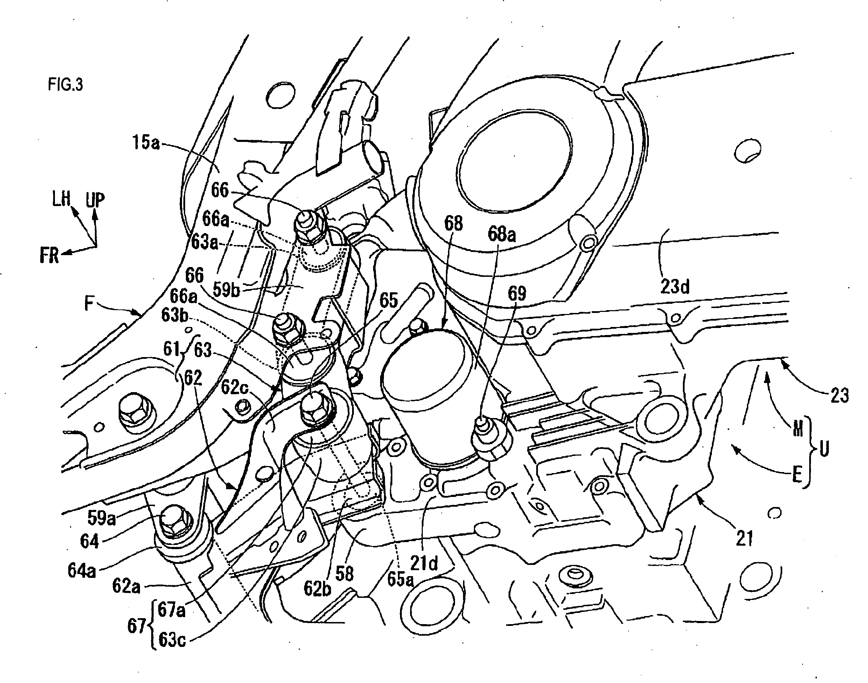

As shown in Fig. 3, a pair of left and right unit-side coupling parts 58 are provided on the front lower side of the swing unit U. On the other hand, a pair of left and right vehicle body-side lower coupling parts 59a are provided at rear ends of the lower-down-frames 15, inside the vehicle-width direction, in the body frame F, and a pair of left and right vehicle body-side upper coupling parts 59b are provided on the rear side of proximal ends of the rear inclined parts 15a.

The left and right unit-side coupling parts 58 are located behind the left and right vehicle body-side lower coupling parts 59a and underneath the left and right vehicle body-side upper coupling parts 59b, respectively. An arm member 62 in the link member 61 is provided across the left and right vehicle body-side lower coupling parts 59a and the left and right unit-side coupling parts 58, and a pair of left and right coupling members 63 in the link member 61 are provided across the left and right vehicle body-side upper coupling parts 59b and the left and right unit-side coupling parts 58.

The arm member 62 is configured in such a manner that a pair of left and right arms 62b extend to the rear from the left and right sides of a pipe-shaped proximal end 62a provided between the left and right vehicle body-side lower coupling parts 59a. The proximal end 62a of the arm member 62 is coupled to the left and right vehicle body-side lower coupling parts 59a through a single first coupling shaft 64, and rear ends of the left and right arms 62b are coupled to the left and right unit-side coupling parts 58 through a single second coupling shaft 65. Each of first rubber bushes 64a is provided between the left and right sides of the first coupling shaft 64 and the proximal end 62a, and each of second rubber bushes 65a is provided between the second coupling shaft 65 and the left and right unit-side coupling parts 58.

The coupling member 63 has upper, middle, and lower cylindrical parts 63a, 63b and 63c, which are directed along the vehicle-width direction, at its upper end, intermediate portion, and lower end, respectively.
The upper and intermediate cylindrical parts 63a and 63b are coupled to an upper portion and a lower portion of each vehicle body-side upper coupling part 59b through third coupling shafts 66. Third rubber bushes 66a are provided between the third coupling shafts 66 and the upper and intermediate cylindrical parts 63a and 63b.

The lower cylindrical part 63c is located at a rear end of the arm 62b outside the vehicle-width direction, and is coupled to the arm 62b and the unit-side coupling parts 58 through the second coupling shaft 65. A fourth rubber bush 67a is provided between the second coupling shaft 65 and the lower cylindrical part 63c. Hereinafter, a component composed of the lower cylindrical part 63c and the fourth rubber bush 67a is referred to as a pipe bush 67 in some cases. It should be noted that the reference numeral 62c in the drawing denotes an auxiliary arm which is extended so as to be branched from the outside of the arm 62b in the vehicle-width direction and which supports the pipe bush 67 from the outside in the vehicle-width direction.

By screwing the first coupling shaft 64 which is a long bolt, the proximal end 62a of the arm member 62 and the vehicle body-side lower coupling parts 59a of the body frame F are rotatably coupled to each other by an amount by which the first rubber bushes 64a are twisted. By screwing the second coupling shaft 65 which is a long bolt, the front lower side of the swing unit U and a rear end of each arm 62b of the arm member 62 are rotatably coupled to each other by an amount by which the second rubber bushes 65a are twisted.

A rear end of each arm 62b of the arm member 62 is supported by the body frame F through the corresponding coupling member 63, and accordingly vertical swing of the swing unit U is caused mainly by the twist of the second rubber bush 65a located at a rear end of the arm member 62. Transmission of oscillation from the swing unit U to the body frame F can be prevented by interposing a plurality of rubber bushes 64a, 65a, 66a, and 67a between the swing unit U and the body frame F.

An oil filter 68 of a cartridge type is attached to the lower left side of the crankcase 21.
With reference to Fig. 5 together, the oil filter 68 is configured in such a manner that an element is accommodated in a cylindrical case 68a with a bottom, and an opening of the case 68a is closed using a disk-shaped set plate 68b. The center axis line (the center axis line of the case 68a) is directed along the left-right direction (the crankshaft direction), and the opening-side of the case 68a is attached to a left-side wall 21d so as to face a holder part 71 on the left-side wall 21d of the crankcase 21 (the left case half body 21a).

The left-side wall 21d of the crankcase 21 is located at a position shifted to the right from a left-side wall 23d of the transmission case 23, and the oil filter 68 is attached so as to protrude to the left from the left-side wall 21d. The oil filter 68 is arranged ahead of and diagonally below a front end of the transmission case 23 while being adjacent thereto with a predetermined gap. An oil sensor 69 for detecting an oil temperature or an oil pressure is attached to the vicinity of the oil filter 68 on the left-side wall 21d of the crankcase 21.

An oil outflow port 68d is formed at a middle portion of the set plate 68b, around which a plurality of oil inflow ports 68c are formed in line alongside the circumferential direction. The oil filter 68 allows an engine oil to flow inside the case 68a from each oil inflow port 68c, and the oil is filtered by passing through the element from the outside to the inside, so that the oil is allowed to flow out from the oil outflow port 68d to the outside of the case 68a.

Inside the crankcase 21, there is formed an oil outflow passage 72 which extends from a middle portion (a region opposite to the oil outflow port 68d of the oil filter 68) of the holder part 71 to the right (inside in the left-right direction) and which extends along the left-right direction while being substantially parallel to the crankshaft 31 (the crankshaft line C1). A nozzle 72a in communication with the oil outflow passage 72 protrudes from a middle portion of the holder part 71 to the left, a thread on the outer circumference of the nozzle 72a and that on the inner circumference of the oil outflow port 68d are fit together by screwing, and the oil filter 68 itself is rotated around the axis line thereof to be tightened together. Accordingly, the oil filter 68 is detachably attached to the holder part 71, and the oil outflow passage 72 and the oil outflow port 68d are in communication with each other.

A circular-shaped oil groove 71a is formed in the holder part 71 so as to be opposite to each oil inflow port 68c of the oil filter 68. A part of the oil groove 71a is opposite to a discharge port of the oil pump 81 in the left-right direction, and a discharge-side oil passage 73 along the left-right direction is formed inside the crankcase 21 so as to connect the oil groove 71a to the discharge port by the shortest length.

Inside a lower portion of the right case half body 21b, the oil pump 81 for circulating an engine oil is arranged, so that a driving shaft 83 thereof is directed along the left-right direction. A driven sprocket 84 is provided coaxially with the driving shaft 83 of the oil pump 81, and an endless chain 85 is wound around the driven sprocket 84 and the drive sprocket 82, and accordingly the oil pump 81 is rotationally driven in cooperation with the crankshaft 31.

On the lower right side of the right case half body 21b, a water pump 86 for circulating an engine cooling water is arranged, so that a driving shaft 87 thereof is coaxially with the driving shaft 83 of the oil pump 81. A left end of the driving shaft 87 of the water pump 86 is engaged with a right end of the driving shaft 83 of the oil pump 81 so as not to be relatively rotated. When the oil pump 81 is driven, the water pump 86 is also driven. A cooling water from the water pump 86 is introduced from the left side of the crankcase 21 to the inside of the cylinder part 22 through a cooling-water communication passage 74 provided between the left and right case half bodies 21a and 21b. It should be noted that the reference numeral 58 denotes the unit-side coupling parts to which the link member 61 is coupled on the front lower side of the swing unit U.

An intake-side oil passage 73a in communication with the inside of an oil pan located on the lower side of the crankcase 21 is connected to an intake port of the oil pump 81. The discharge-side oil passage 73 in communication with the oil inflow ports 68c of the oil filter 68 is connected to the discharge port of the oil pump 81.
When the oil pump 81 is rotationally driven, an engine oil stored inside the oil pan is absorbed by the oil pump 81 through the intake-side oil passage 73a formed in the right case half body 21b. An oil discharged from the oil pump 81 flows inside the oil groove 71a of the holder part 71 through the discharge-side oil passage 73 provided between the left and right case half bodies 21a and 21b, and is directly introduced from each oil inflow port 68c to the inside of the oil filter 68 through the oil groove 71a.

An oil filtered by passing through the inside of the oil filter 68 is directly introduced from the oil outflow port 68d to the inside of the oil outflow passage 72 through the nozzle 72a. The oil outflow passage 72 is provided between the left and right case half bodies 21a and 21b (in more detail, the oil outflow passage 72 is provided in such a manner that a right end thereof reaches the right case half body 21b). A right end of the oil outflow passage 72 is in communication with a middle portion, in the left-right direction, of a main oil gallery 76 extending substantially parallel to the crankshaft 31 between the left and right case half bodies 21a and 21b inside the crankcase 21, through a communication groove 75 provided in a concave manner on the dividing face B1 in the right case half body 21b. Specifically, an oil introduced inside the oil outflow passage 72 flows in the middle portion, in the left-right direction, of the main oil gallery 76 through the communication groove 75. It should be noted that the communication groove 75 may be formed in the left case half body 21a, and may be formed in the both left and right case half bodies 21a and 21b.

To both left and right ends of the main oil gallery 76, there are respectively connected left and right oil-filler passages 42a and 42b for bearings which are formed inside left and right inner walls 41a and 41b forming left and right crankshaft bearings 36a and 36b in the left and right case half bodies 21a and 21b. The left and right oil-filler passages 42a and 42b for bearings extend substantially orthogonal to the crankshaft 31 (the crankshaft line C1), and are in communication with oil-filler grooves 43a and 43b on the inner circumference of the left and right crankshaft bearings 36a and 36b, respectively. Accordingly, an engine oil which flows in the main oil gallery 76 is supplied to sliding faces of the left and right metal bearings 39a and 39b.

A left end of the main oil gallery 76 extends to the left relative to the left inner wall 41a (left crankshaft bearing 36a), and a detection part of the oil sensor 69 faces inside the left end. On the other hand, a power generator-side oil passage 44 extending substantially parallel to the crankshaft 31 on the right side relative to the right inner wall 41b (the right crankshaft bearing 36b) is connected to a right end of the main oil gallery 76. The power generator-side oil passage 44 is in communication with an intra-cover oil passage 45 formed inside the right case cover 21c.
An oil injection port 45a for the generator 37 inside the right case cover 21c is appropriately formed in the intra-cover oil passage 45. Accordingly, a part of oil inside the main oil gallery 76 is supplied to the generator 37 through the power generator-side oil passage 44 and the intra-cover oil passage 45.

A part of oil supplied to the left crankshaft bearing 36a is supplied to a valve system inside the cylinder head 33 (inside a valve chamber) through a cylinder-side oil passage (not shown) and the like formed in the left case half body 21a. The oil inside the cylinder head 33 is returned to the inside of the oil pan located on the lower side of the crankcase 21 through the cam chain chamber 55 on the right side of the cylinder part 22. It should be noted that the inside of the crankcase 21 and the inside of the transmission case 23 are oil-tightly partitioned from each other, and no oil is supplied to the belt-type continuously variable transmission mechanism 24.
On the other hand, a part of oil supplied to the right crankshaft bearing 36b is supplied to a sliding face of a metal bearing on the inner circumference of the large end 35a of the connecting rod 35 through an oil hole 47a which penetrates the right journal 31b of the crankshaft 31 in the diameter direction, an oil hole 47b which penetrates the crank pin 31e in the diameter direction, and an oil hole 47c through which the oil holes 47a and 47b are diagonally in communication with each other.

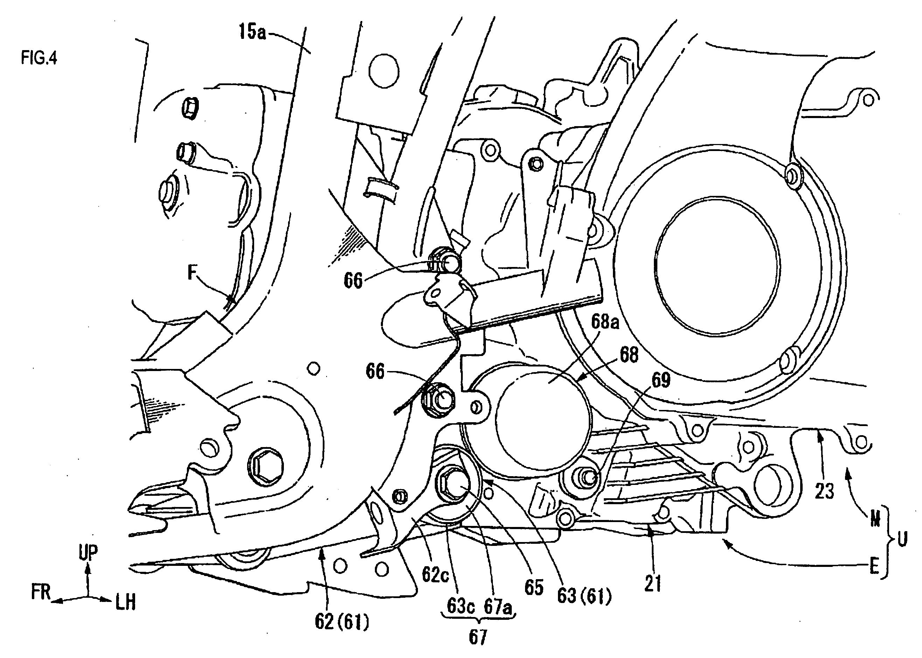

As shown in Fig. 3, the left unit-side coupling part 58 is formed so as to extend diagonally downward to the front from the left-side wall 21d of the crankcase 21. A rear end of the left arm 62b of the link member 61 and the pipe bush 67 arranged on the left side relative to the left unit-side coupling part 58 are arranged ahead of and diagonally below the oil filter 68 arranged on the left side relative to the left-side wall 21d while being adjacent thereto with a predetermined gap (see Fig. 4). The amounts by which a rear end of the left arm 62b and the pipe bush 67 protrude to the left from the left-side wall 21d of the crankcase 21 are the same as that of the oil filter 68, thereby effectively preventing the oil filter 68 from being splashed with mud water or from being hit by pebbles from a ground surface at the time of driving the motorcycle 1.

Incidentally, the oil sensor 69 for detecting an oil temperature (or an oil pressure) is attached behind and diagonally below the oil filter 68 on the left-side wall 21d of the crankcase 21. The oil sensor 69 is arranged so as to protrude to the left from the left-side wall 21d, and thus the arrangements of the oil filter 68 and the link member 61 effectively prevent the oil sensor 69 from being splashed from a ground surface.

As described above, the oil filter cover structure in the above-described embodiment is applied to the motorcycle 1 in which a lower portion of the engine E is swingably suspended by the body frame F through the link member 61, the oil filter 68 of a cartridge type is attached to a lower portion of the engine E from the lateral direction, and the oil filter 68 is arranged behind the link member 61 while being adjacent thereto.

According to this configuration, by allowing the oil filter 68 of a cartridge type to be attached and detached to and from a lower portion of the engine E from the lateral direction, it is possible to improve workability at the time of exchanging the oil filter. By arranging the oil filter 68 behind the link member 61, the oil filter 68 is effectively prevented from being splashed with mud or from being hit by pebbles from a ground surface. Thus, it is possible to cut down the cost and weight while minimizing the number of components around the engine without the necessity of providing an additional cover member and the like.

In the above-described oil filter cover structure, the link member 61 includes the second coupling shaft 65 inserted into a lower portion of the engine E and the pipe bush 67 into which the second coupling shaft 65 is inserted, the pipe bush 67 is arranged ahead of the oil filter 68, and accordingly a cover range of the oil filter 68 can be increased.

Further, in the above-described oil filter cover structure, the oil sensor 69 for detecting an oil temperature (or an oil pressure) is provided and the oil sensor 69 is arranged behind the link member 61 while being adjacent to the oil filter 68. Accordingly, the link member 61, together with the oil filter 68, serves to cover the oil sensor 69, thereby effectively preventing the oil sensor 69 from being splashed with mud or from being hit by pebbles from a ground surface with a simple configuration.

It should be noted that the invention is not limited to the above-described embodiment. The invention may be configured to prevent the oil filter from being splashed from a ground surface only with the arm member without providing the coupling part (the pipe bush) in the link member.
1 ... Motorcycle (vehicle)
F ... Body frame
E ... Engine
61 ... Link member
64 ... First coupling shaft (coupling shaft)
67 ... Pipe bush
68 ... Oil filter
69 ... Oil sensor (sensor)

## Claims

1. Motorcycle comprising an oil filter arrangement structure, said arrangement structure comprising an oil filter (68), an engine (E) and a link member (61), the lower portion of the engine (E) being swingably suspended by a body frame (F) through the link member (61), wherein the oil filter (68) is of a cartridge type and is attached to a lower portion of the engine (E) from the lateral direction,
**characterized in that**
the oil filter (68) is arranged behind the link member (61) while being adjacent thereto.

2. The motorcycle of Claim 1,
wherein the link member (61) includes a coupling shaft (64) inserted into a lower portion of the engine (E) and a pipe bush (67) into which the coupling shaft (64) is inserted, the pipe bush (67) being arranged ahead of the oil filter (68).

3. The motoclycle of Claim 1 or 2, further comprising:
a sensor (69) for detecting an oil temperature or an oil pressure, the sensor (69) being arranged behind the link member (61) while being adjacent to the oil filter (68).

## Patentansprüche

1. Motorrad, das eine Ölfilteranordnungsstruktur aufweist, wobei die Anordnungsstruktur ein Ölfilter (68), einen Motor (E) und ein Verbindungselement (61) aufweist, wobei der untere Abschnitt des Motors (E) an einem Karosserierahmen (F) durch das Verbindungselement (61) schwenkbar aufgehängt ist, wobei das Ölfilter (68) vom Patronentyp ist und aus der seitlichen Richtung an einem unteren Abschnitt des Motors (E) befestigt ist,
**dadurch gekennzeichnet, dass**
das Ölfilter (68) hinter dem Verbindungselement (61) angeordnet ist, während es benachbart dazu ist.

2. Motorrad nach Anspruch 1,
wobei das Verbindungselement (61) eine Kopplungswelle (64), die in einen unteren Abschnitt des Motors (E) eingesetzt ist und eine Rohrhülse (67) umfasst, in welche die Kopplungswelle (64) eingeschoben ist, wobei die Rohrhülse (67) vor dem Ölfilter (68) angeordnet ist.

3. Motorrad nach Anspruch 1 oder 2, das ferner aufweist:
einen Sensor (69) zum Erfassen einer Öltemperatur oder eines Öldrucks, wobei der Sensor (69) hinter dem Verbindungselement (61) angeordnet ist, während er benachbart zu dem Ölfilter (68) ist.

## Revendications

1. Motocycle comprenant une structure d'agencement de filtre à huile, ladite structure d'agencement comprenant un filtre à huile (68), un moteur (E) et un élément de liaison (61), la portion inférieure du moteur (E) étant suspendue de manière à pouvoir pivoter par un cadre (F) au moyen de l'élément de liaison (61), dans lequel le filtre à huile (68) est de type cartouche et est fixé à une portion inférieure du moteur (E) selon la direction latérale, **caractérisé en ce que** le filtre à huile (68) est agencé en arrière de l'élément de liaison (61) tout en lui étant adjacent.

2. Motocycle selon la revendication 1, dans lequel l'élément de liaison (61) comprend une tige de couplage (64) insérée dans une portion inférieure du moteur (E) et une douille tubulaire (67) dans laquelle la tige de couplage (64) est insérée, la douille tubulaire (67) étant agencée en avant du filtre à huile (68).

3. Motocycle selon la revendication 1 ou 2, comprenant en outre : un capteur (69) pour détecter une température d'huile ou une pression d'huile, le capteur (69) étant agencé en arrière de l'élément de liaison (61) tout en étant adjacent au filtre à huile (68).
